# EUROPÄISCHE PATENTSCHRIFT

(11) **EP 1 006 807 B1**
(45) Veröffentlichungstag und Bekanntmachung des Hinweises auf die Patenterteilung: **21.07.2004**
(21) Anmeldenummer: 98946400.3
(22) Anmeldetag: 21.08.1998
(51) Int. Cl.: A23K 1/00, A23K 1/18

(54) **GELARTIGES FUTTER FÜR WASSERTIERE**
GELLED FOODSTUFF FOR AQUATIC ANIMALS
ALIMENT GELIFIE POUR ANIMAUX AQUATIQUES

(30) Priorität: 06.09.1997 DE 19739167
(43) Veröffentlichungstag der Anmeldung: 14.06.2000
(73) Patentinhaber: Tetra GmbH, 49324 Melle (DE)
(72) Erfinder: KÜRZINGER, Hubert, D-49324 Melle (DE); KUHLMANN, Dietmar, D-31655 Stadthagen (DE)
(74) Vertreter: Miller, Andreas, Dr.
(86) Internationale Anmeldenummer: PCT/EP1998/005317
(87) Internationale Veröffentlichungsnummer: WO 1999/012430

(56) Entgegenhaltungen:
- EP-A- 0 137 748
- EP-A- 0 577 034
- WO-A-94/21139
- WO-A-95/28830
- WO-A-97/00021
- WO-A-97/08960
- DE-U- 29 722 296
- GB-A- 2 175 486
- LU-A- 87 750
- DATABASE WPI Section Ch, Week 7812 Derwent Publications Ltd., London, GB; Class C03, AN 78-22980A XP002086949 -& JP 52 021187 A (LACTONE KAGAKU KOGY) , 17. Februar 1977

## Beschreibung

Die Erfindung betrifft ein industriell produzierbares Futter für Wassertiere im Süß- und Seewasser, insbesondere Fische, Shrimps und Invertebraten, einsetzbar auch als Ersatz von gefrorenem Naturfutter (= Frostfutter) für Warm- und Kaltwasser-Zierfische in der Form eines viskosen Gels.

Bekannt ist die Verfütterung von gefrostetem Naturfutter (z.B. Salinenkrebse = Artemia; Krill; Wasserflöhe = Daphnia; Bachflohkrebse = Gammarus; Schlammröhrenwürmer = Tubifex; rote Mückenlarven = Chironomus; weiße Mückenlarven = Chaoborus; schwarze Mückenlarven = Culex; Zooplankton = Cyclops; Fischrogen; Rinderherz; Menüs = Kombinationsprodukte) an Warm- und Kaltwasserzierfische in Süß- und Seewasseraquarien. Spezialisierte Aquarianer verfüttern oft ausschließlich Lebendfutter, FD (= freeze dried) -Naturfutter und/oder Frostfutter. Die überwiegende Mehrzahl der Aquarianer verabreicht jedoch Trockenfutter (Flocken, Extrudate, Tabletten, Pellets), zum Teil in Kombination mit o.g. Futterarten.

EP 0 577 034 beschreibt Lösungen, die als Futter in Meer- oder Süßwasser geeignet sind.

Die Analyse von Frostfutter liefert Daten für die chemische Zusammensetzung: der durchschnittliche Wassergehalt bzw. Gehalt an Trockensubstanz beträgt 90 - 95 % bzw. 5 - 10 %. Somit ist Frostfutter durch sehr hohe Gehalte an Wasser charakterisiert.

Futtertiere in gefrorenem Zustand werden in Form von Blöcken, Platten oder Würfeln verkauft. Für die Lagerung von Frostfutter sowohl beim Händler als auch beim Aquarianer ist eine Tiefkühllagerung erforderlich. Für diese Form der Futterkonservierung ist eine Tiefkühltruhe oder ein Tiefkühlfach im Kühlschrank nötig, in dem Temperaturen deutlich unter 0°C erzeugt werden können. Das tiefgefrorene Futter wird vom Aquarianer entweder zuerst aufgetaut und dann verfüttert oder aber im gefrorenen Zustand ins Aquariumwasser gegeben. Durch die üblicherweise relativ hohen Wassertemperaturen von ca. 20 - 30 °C taut das Naturfutter rasch auf und kann von den Zierfischen gefressen werden. Nach dem Auftauen ist das Futter jedoch rasch zu verfüttern, da es schnell verdirbt. Einmal aufgetautes Futter darf nicht erneut eingefroren werden. Im Kühlschrank ist tiefgefrorenes Futter 3 - 4 Tage haltbar, bei Temperaturen deutlich unter 0°C ist es maximal ein Jahr lagerfähig.

Aufgabe der Erfindung ist es daher, ein industriell produzierbares Futter für Wassertiere, insbesondere Fische, Shrimps und Invertebraten, einsetzbar in Süßund Seewasser, bereitzustellen, das insbesondere für Warm- und Kaltwasser-Zierfische im Aquarium als potentieller Ersatz für Frostfutter einsetzbar ist, ohne dabei die geschilderten Nachteile von tiefgefrorenem Futter aufzuweisen.

Überraschenderweise wurde nun gefunden, daß durch die Verwendung von Gelbildnern, bevorzugt eine Kombination von mehreren Gelbildnern, und o.g. Naturfutter allein oder in Kombination, sowie eventuell zusätzliche Naturrohstoffe (z.B. Spirulina-Algen), Vitamine, Mineralstoffe, Aromastoffe, Konservierungsmittel u.a. Zusätze, ein Futter industriell produziert werden kann, das als Ersatz für Frostfutter einsetzbar und in verschlossenen Behältnissen bei normaler Raumtemperatur problemlos lagerfähig ist und somit deutlich verbesserte Handhabungs-Eigenschaften als Frostfutter besitzt.

Gegenstand der Erfindung ist daher ein Futter für Wassertiere, insbesondere Fische, Shrimps und Invertebraten im Süß- und Seewasser, einsetzbar als Ersatz von Frostfutter für die Ernährung von Warm- und Kaltwasser-Zierfischen im Aquarium in Form eines viskosen Gels. Bevorzugt ist ein Zierfischfutter, welches 0,001 - 50 % Gelbildner, 0,1 - 90 % Naturfutter und je nach Einsatzzweck weitere Zusätze bei einem Wassergehalt von 20 - 99 % enthält. Besonders bevorzugt ist ein Futter, welches 0,1 - 10 % Gelbildner, 1 - 20 % Naturfutter und je nach Einsatzzweck weitere Zusätze bei einem Wassergehalt von 50 - 99 % enthält.

Die Viskosität des erfindungsgemäßen gelartigen Futters liegt in einem Bereich von 1 - 2 x 10⁶ mpa·s, bevorzugt in einem Bereich von 1 x 10² - 1 x 10⁶ mpa·s und ganz besonders bevorzugt im Bereich von 1,5 x 10² bis 5 x 10⁵ mpa·s.

Geignete Gelbildner können synthetischen, semisynthetischen oder natürlichen Ursprungs sein.

Synthetische Gelbildner sind beispielsweise Celluloseether, wie Alkyl- und/oder Hydroxyalkyl-substitutierte Celluloseether mit 1 bis 4 Kohlenstoffatomen in den Alkylkette, bevorzugt Methylcellulose, Hydroxyethylcellulose, Hydroxypropylcellulose, Hydroxyethylmethylcellulose, Hydroxyethylethylcellulose, Hydroxypropylmethylcellulose oder dergleichen. Besonders bevorzugt ist HPMC.

Natürliche Gelbildner bzw. semi-synthetische oder auf biotechnologischem Wege gewonnene Gelbildner sind Hydrokolloide pflanzlichen, tierischen oder bakteriellen Ursprungs wie z.B. Polysaccharide, Pflanzengummis oder Kollagene. Diese werden gewonnen aus natürlichen Algen, natürlichen Pflanzensamengummis, natürlichen Pflanzensäften, natürlichen Fruchtextrakten, biosynthetische Gummis, biosynthetisch veränderte Stärken oder Zellulosematerialien oder exocelluläre Polysaccharide. Geeignet sind beispielsweise Pektine, Alginate, Carrageenan, Agar Agar, Guar Gummi, Gummi arabicum, Tragant, Karaya-Gummi, Ghatti-Gummi, Johannisbrotkernmehl, Arabian, Gellan, Konjacmannan, Galactomannan, Funoran, Sago, Tara-Gummi, Xanthane, Acetan, Welan, Rhamsan, Furcelleran, Succinoglycan, Scleroglycan, Schizophyllan, Tamarinden Gummi, Curdlan, Pullulan, Dextran oder Gelatine. Besonders bevorzugt ist Agar Agar.

Die genannten Gelbildner konnen allein oder bevorzugt in synergistischen, die Akzeptanz und die Eigenschaften des Futters verbessernden Kombinationen eingesetzt werden.

Zur Verbesserung der Eigenschaften und vor allem der Akzeptanz können die erfindungsgemäßen Futtermischungen zusätzlich Weichmacher oder Feuchthalter enthalten, wie z.B. Glycerin, Polethylenglycol, Propylenglycol, Glycin, Sorbit, Mannit, Rohrzucker, Maissyrup, Fructose, Dioctylnatrium sulfosuccinat, Triethylcitrat, Tributylcitrat, 1,2-Propylenglycol, Mono-, Di- oder Triacetate des Glycerins, Acetamid, Formamid oder Lactamid und zwar allein oder in synergistischen Kombinationen.

Zur Verbesserung der Konsistenz und des Zusammenhalts der Futtermischung können zusätzlich Chelatbildner enthalten sein, wie z.B. Ethylendiamintetraessigsäure, Essigsäure, Borsäure, Zitronensäure, Gluconsäure, Milchsäure, Phosphorsäure, Weinsäure sowie Salze der genannten Säuren oder Metaphosphate, Dihydroxyethylglycin, Lecithin oder Beta-Cyclodextrin oder Gemische davon.

Das bevorzugte erfindungsgemäße gelartige Futter ist ein vollständiger Ersatz für Frostfutter. Es enthält bevorzugt Naturfutter in Form ganzer Tiere oder Teilen. Bevorzugte Naturfutterarten sind Salinenkrebse (Artemia), Krill, Wasserflöhe (Daphnia), Bachflohkrebse (Gammarus), Schlammröhrenwürmer (Tubifex), rote Mückenlarven (Chironomus), weiße Muckenlarven (Chaoborus), schwarze Mückenlarven (Culex), Zooplankton (Cyclops), Bosmina, Mysis, Schrimps, Maden, Mehlwürmer, Fischrogen, Krebseier, Muschelfleisch, Fischfleisch, Tintenfisch oder Rinderherz, welche allein oder in Kombination als ganze Tiere und/oder in Teilen verwendet werden.

Die Rezeptur des neuartigen Futters ist aus verschiedenen Komponenten zusammengesetzt. Gunstig für die Konsistenz des Futters sowie den Zusammenhalt der Partikel sind die oben genannten Gelbildner, besonders bevorzugt Agar Agar, ein aus Meeresalgen hergestelltes, zur Gruppe der Hydrokolloide gehörendes Geliermittel. Agar Agar ist eine getrocknete, hydrophile Kolloid-Substanz aus Riesenmolekülen, die einen linearen, fadenförmigen Aufbau haben und vor allem aus Galaktose bestehen. Für die Herstellung werden einige Arten der Rotalgen verwendet und zwar Gelidium und Gracellaria. Das Hydrokolloid ist in kaltem Wasser nicht loslich, ist aber bei höheren Temperaturen praktisch vollständig löslich. Der Schmelzpunkt liegt bei ca. 90°C, der Gelierpunkt bei ca. 35 - 40°C unter Ausbildung eines starken, klaren, thermoreversiblen Gels, welches erst bei Temperaturen über 85°C wieder schmilzt.

Das erfindungsgemäße gelartige Futter wird zweckmäßigerweise mittels eines Extruders aus einer oder mehreren Naturfutterarten und/oder handelsüblichen Futtermischungen, Rohstoffen und einem oder mehreren Gelbildnern sowie gegebenenfalls üblichen Vitaminen, Mineral-, Farb-, Aroma-, Lock- und Konservierungsstoffen unter Zugabe hoher Wassermengen hergestellt oder aber mittels Rührbehälter aufbereitet. Anschließend erfolgt die Formung, Kühlung und Konfektionierung. Bevorzugterweise wird das Futter in direkt gebrauchsfertiger Form in Glaser, Dosen, Beutel, Tuben oder ähnliches oder als zylinderförmige Sticks abgepackt. Es kann jedoch auch einem weiteren Trocknungsschritt unterworfen werden und danach zu Futterformen wie z.B. Granulate, Würfel, Platten, Flocken oder Tabletten weiterverarbeitet werden, die gegebenenfalls vor der Verfütterung kurz mit Wasser rekonditioniert werden können. Werden Naturfutter wie z.B. Muckenlarven, Daphnien oder planktonische Tiere verarbeitet, so kann es in getrocknetem, frischem oder aufgetautem Zustand mit und ohne Flüssigkeit weiterverarbeitet werden.

Als Konservierungsmittel finden üblicherweise Ethoxyquin, BHT, Calciumpropionat, Kaliumsorbat, Zitronensäure, Milchsäure oder Salz (Koch-, Seesalz) Verwendung. Zur pH-Wertabsenkung werden auch handelsübliche Komponenten wie z.B. Milchsäure oder Salzsäure eingesetzt.

Die erfindungsgemäßen Futterstücke sind in bezug auf die meist kleinen Zierfische relativ groß. Das angebotene Futter kann daher nicht als Ganzes gefressen werden, vielmehr beißt der Fisch kleine Stücke davon ab. Voraussetzung ist, daß durch eine geeignete Auswahl von einem oder mehreren Gelbildnern u.U. in Kombination mit anderen Nahrungskomponenten die Konsistenz des Futters so eingestellt ist, daß die Fische aufgrund der weichen Beschaffenheit problemlos maulgerechte Stücke abbeißen und anschließend abschlucken können. Eine weitere Möglichkeit besteht in der Herstellung und Applikation eines Futters, dessen Gelbildner sich aufgrund ihres spezifischen Lösungsverhaltens ganz oder teilweise im Wasser lösen und so Nahrungskomponenten freisetzen.

### Beispiele für mögliche Futterrezepturen:

| | Variante 1 | Variante 2 |
|---|---|---|
| - Gelbildner | 1,5-5,5 % | 0,5-10 % |
| - Konservierungsmittel | 0,1-12,4 % | 0,15-11,9 % |
| - Naturfutter | 0,1-9 % | 0-3 % |
| - Aromastoffe | - | 1-10 % |
| - Farbgeber | - | 0-0,05 % |
| - Wasser | 73-94 % | 70-90 % |

## Patentansprüche

1. Futter für Wassertiere, insbesondere Fische, Shrimps und Invertebraten im Süß- und Seewasser in Form eines viskosen Gels, einsetzbar als Ersatz von Frostfutter für die Ernährung von Warm- und Kaltwasser-Zierfischen im Aquarium, enthaltend 0,001 - 50 % Gelbildner, 0,1 - 90 % Naturfutter bei einem Wassergehalt von 20 - 99 % und einer Viskosität von 1 bis 2 x 10⁶ mpa·s.

2. Futter in Form eines viskosen Gels gemäß Anspruch 1, enthaltend 0,1 - 10 % Gelbildner, 1 - 20 % Naturfutter bei einem Wassergehalt von 50 - 99 % und einer Viskosität von 1 x 10² - 1 x 10⁶ mpa·s.

3. Futter in Form eines viskosen Gels gemäß Anspruch 1 oder 2, **dadurch gekennzeichnet, daß** als Gelbildner Alkyl- und/oder Hydroxyalkyl-substitutierte Celluloseether mit 1 bis 4 Kohlenstoffatomen in den Alkylkette, Polysaccharide, Pflanzengummen oder Kollagene oder synergistische Mischungen davon verwendet werden.

4. Futter in Form eines viskosen Gels gemäß Anspruch 3, **dadurch gekennzeichnet, daß** der Celluloseether ausgewählt ist aus der Gruppe Methylcellulose, Hydroxyethylcellulose, Hydroxypropylcellulose, Hydroxyethylmethylcellulose, Hydroxyethylethylcellulose oder Hydroxypropylmethylcellulose.

5. Futter in Form eines viskosen Gels gemäß Anspruch 3, **dadurch gekennzeichnet, daß** der Gelbildner ausgewählt ist aus der Gruppe Pektine, Alginate, Carrageenan, Agar Agar, Guar Gummi, Gummi arabicum, Tragant, Karaya-Gummi, Ghatti-Gummi, Johannisbrotkernmehl, Arabian, Gellan, Konjacmannan, Galactomannan, Funoran, Sago, Tara-Gummi, Xanthane, Acetan, Welan, Rhamsan, Furcelleran, Succinoglycan, Scleroglycan, Schizophyllan, Tamarinden Gummi, Curdlan, Pullulan, Dextran oder Gelatine.

6. Futter in Form eines viskosen Gels gemäß der Ansprüche 1 bis 3, **dadurch gekennzeichnet, daß** es einen Weichmacher bzw. Feuchthalter enthält.

7. Futter in Form eines viskosen Gels gemäß Anspruch 6, **dadurch gekennzeichnet, daß** als Weichmacher Glycerin verwendet wird.

8. Futter in Form eines viskosen Gels gemäß der Ansprüche 1 bis 3, **dadurch gekennzeichnet, daß** es Konservierungsstoffe enthält.

9. Futter in Form eines viskosen Gels gemäß Anspruch 8, **dadurch gekennzeichnet, daß** als Konservierungsmittel Ethoxyquin, BHT, Calciumpropionat, Kaliumsorbat, Zitronensäure, Milchsäure oder Salz (Koch-, Seesalz) verwendet werden.

10. Futter in Form eines viskosen Gels gemäß der Ansprüche 1 bis 9, **dadurch gekennzeichnet, daß** das Naturfutter in Form ganzer Tiere oder Teilen ausgewählt aus den Naturfutterarten Salinenkrebse (Artemia), Krill, Wasserflöhe (Daphnia), Bachflohkrebse (Gammarus), Schlammröhrenwürmer (Tubifex), rote Mückenlarven (Chironomus), weiße Mückenlarven (Chaoborus), schwarze Mückenlarven (Culex), Zooplankton (Cyclops), Bosmina, Mysis, Schrimps, Maden, Mehlwürmer, Fischrogen, Krebseier, Muschelfleisch, Fischfleisch, Tintenfisch und/oder Rinderherz, allein oder in Kombination enthalten ist.

11. Futter in Form eines viskosen Gels gemäß Anspruch 10, **dadurch gekennzeichnet, daß** es zusätzliche Naturrohstoffe enthält.

12. Futter in Form eines viskosen Gels gemäß der Ansprüche 10 oder 11, **dadurch gekennzeichnet, daß** es zusätzlich Vitamine, Mineralstoffe, Aromastoffe, Lockstoffe, Farbstoffe und/oder Carotinoide enthält.

13. Verfahren zur Herstellung gelartiger Futter gemäß der Ansprüche 1 bis 12, **dadurch gekennzeichnet, daß** eine oder mehrere Naturfutterarten und/oder handelsüblichen Futtermischungen, Rohstoffe mit einem oder mehreren Gelbildnern sowie gegebenenfalls üblichen Vitaminen, Mineral-, Farb-, Aroma-, Lockund Konservierungsstoffen unter Zugabe hoher Wassermengen im Extruder bei erhöhter Temperatur (Reaktionstemperatur) vermischt und anschließend unter Kühlung die Mischung mittels eines Extruders zu zylinderförmigen Sticks, Granulaten, Würfeln, Platten, Flocken oder Tabletten ausgeformt und diese in Gläser, Dosen, Blisterpackungen, Beutel, Tuben oder ähnliches abgefüllt oder direkt nach dem Extruder abgefüllt und anschließend abgekühlt werden.

14. Verfahren zur Herstellung gelartiger Futter gemäß der Ansprüche 1 bis 12, **dadurch gekennzeichnet, daß** eine oder mehrere Naturfutterarten und/oder handelsüblichen Futtermischungen, Rohstoffe mit einem oder mehreren Gelbildnern sowie gegebenenfalls üblichen Vitaminen, Mineral-, Farb-, Aroma-, Lockund Konservierungsstoffen unter Zugabe hoher Wassermengen bei erhöhter Temperatur mittels Rührwerk und Homogenisiereinrichtung vermischt und anschließend unter Kühlung die Mischung zu zylinderförmigen Sticks, Granulaten, Würfeln, Platten, Flocken oder Tabletten ausgeformt und diese in Gläser, Dosen, Blisterpackungen, Beutel, Tuben oder ähnliches abgefüllt oder direkt abgefüllt und anschließend abgekühlt werden.

## Claims

1. Feed for aquatic animals particularly fish, shrimps and invertebrates in fresh and sea water in the form of a viscous gel, for use as a replacement of frozen feed for the maintenance of warm and cold water ornamental fish in an aquarium comprising
0,001- 50% of a gel former, 0,1 - 90% of natural feed at a water content of 20 - 99 % and a viscosity of 1 to 2 x 10⁶ mpa.s.

2. A feed in the form of a viscous gel according to claim 1, containing 0,1-10% of a gel former, 1 - 20% of natural feed at a water content of 50 - 99% by weight and a viscosity of 1 x 10² to 1 x 10⁶ mpa.s.

3. A feed in the form of a viscous gel according to claim 1 or 2, **characterized in that** the gel formers used are alkyl- and/or hydroxyalkyl-substituted cellulose ethers with 1 to 4 carbon atoms in the alkyl chain, polysaccharides, vegetable gums, collagens or synergistic mixtures thereof.

4. A feed in the form of a viscous gel according to claim 3, **characterized in that** the cellulose ether is selected from the group of methylcellulose, hydroxyethylcellulose, hydroxypropylcellulose, hydroxyethylmethyicellulose, hydroxyethylethylcellulose or hydroxypropylmethylcellulose.

5. A feed in the form of a viscous gel according to claim 3, **characterised in that** the gel former is selected from the group of pectins, alginates, carrageenan, agar agar, guar gum, gum arabic, tragacanth, karaya gum, ghatti gum, locust bean flour, arabian, gellan, konjacmannan, galactomannan, funoran, sago, tara gum, xanthans, acetan, welan, rhamsan, furcelleran, succinoglycan, scleroglycan, schizophyllan, tamarind gum, curdlan, pullulan, dextran or gelatine.

6. A feed in the form of a viscous gel according to claims 1 to 3, **characterized in** further containing a softener or a moisture retainer.

7. A feed in the form of a viscous gel according to claim 6, **characterized in that** glycerol is used as softener.

8. A feed in the form of a viscous gel according to claims 1 to 3, **characterized in that** it contains preservation agents.

9. A feed in the form of a viscous gel according to claim 8, **characterized in that** the preservation agents are ethoxyquin, BHT, calcium propionate, potassium sorbate, citric acid, lactic acid or salt (common salt or sea-salt).

10. A feed in the form of a viscous gel according to claims 1 to 9, **characterized in that** it contains additional natural raw materials in the form of complete animals or parts selected from natural feed types as saline crabs (Artemia), water-fleas (Daphnia), stream flea crabs (Gammarus), sludge tubular worms (Tubifex), red midge larvae (Chironomus), white midge larvae ( Chaoborus), Bosmina, Mysis, shrimps, maggots, meal-worms, fish roe, crab eggs, mussel meat, fish meat, cuttle fish, and or beef heart alone or in combinations.

11. A feed in the form of a viscous gel according to claim 10, **characterized by** containing additional natural raw materials.

12. A feed in form of a viscous a gel according to claims 10 or 12, **characterized by** containing additional vitamins, minerals, aroma, lure, colour and/or carotenoids.

13. A process for the production of a gel like feed according to claims 1 to 12, **characterized in that** one or more natural types of feed and/or commercially available feed mixtures and raw materials are mixed in an extruder at elevated temperatures (reaction temperature) while adding high amounts of water with one or more gel-formers, and possibly common vitamins, minerals, colours, aroma, lure and preservation agents, formed by an extruder to give cylinder-shaped sticks, granulates, cubes, plates, flakes or tablets and subsequently cooled and filled into glasses, cans, blister packs, bags or tubes or the like, or filled and packed directly after leaving the extruder and subsequently cooled.

14. A process for the production of a gel like feed according to claims 1 to 12, **characterized in that** one or more natural types of feed and/or commercially available feed mixtures and raw materials are mixed with one or more gel-formers, and possibly usual vitamins, minerals, colours, aroma, lure and preservation agents at elevated temperatures under addition of high amounts of water by stirring and homogenisation means, where after the mixture is either formed with cooling to give cylinder-shaped sticks, granulates, cubes, plates, flakes or tablets which are filled into glasses, cans, blister packs, bags or tubes or the like, or the mixture is directly filled and subsequently cooled down.

## Revendications

1. Nourriture pour animaux aquatiques, notamment poissons, crevettes et invertébrés d'eau douce et d'eau de mer, sous la forme d'un gel visqueux pouvant servir de produit de remplacement pour la nourriture surgelée dans l'alimentation de poissons d'aquarium d'eaux chaude et froide, ayant une teneur en gélifiant de 0,001 à 50 %, une teneur en aliments naturels de 0,1 à 90 % pour une teneur en eau de 20 à 99 % et une viscosité de 1 à 2 x 10⁶ mpa*s.

2. Nourriture sous la forme d'un gel visqueux selon la revendication 1 ayant une teneur en gélifiant de 0,1 à 10 %, une teneur en aliments naturels de 1 à 20 % pour une teneur en eau de 50 à 99 % et une viscosité de 1 x 10² - 1 x 10^{6 mpa} s.

3. Nourriture sous la forme d'un gel visqueux selon la revendication 1 ou 2, **caractérisée en ce que** l'éther cellulosique substitué à l'alkyle et/ou à l'hydroxyalkyle avec 1 à 4 atomes de carbone dans la chaîne d'alkyle, le polysaccharide, les gommes ou les collagènes ou les mélanges synergiques de ces produits sont utilisés comme gélifiant.

4. Nourriture sous la forme d'un gel visqueux selon la revendication 3 **caractérisée en ce que** l'éther cellulosique est choisi parmi le groupe méthylcellulose, hydroxyéthylcellulose, hydroxypropylcellulose, hydroxyéthylméthylcellulose, hydroxyéthyléthylcellulose ou hydroxypropylméthylcellulose.

5. Nourriture sous la forme d'un gel visqueux selon la revendication 3 **caractérisée en ce que** le gélifiant est choisi parmi le groupe pectines, alginates, mousse perlée carragheen, agar-agar, gomme de guar, gomme arabique, gomme adragante, gomme de sterculia, gomme ghatti, farine de caroube, gomme arabane, gomme gellane, gomme de konjac, galactomannane, funorane, sagou, gomme de tare, xanthane, acétane, welan, rhamsane, furcelleran, succinoglycane, scléroglycane, schizophyllane, gomme de tamarin, gomme cardlan, pullulan, dextrane ou gélatine.

6. Nourriture sous la forme d'un gel visqueux selon les revendications 1 à 3 **caractérisée en ce qu'**elle contient un plastifiant et/ou un humidifiant.

7. Nourriture sous la forme d'un gel visqueux selon la revendication 6 **caractérisée en ce que** de la glycérine est utilisée comme plastifiant.

8. Nourriture sous la forme d'un gel visqueux selon les revendications 1 à 3 **caractérisée en ce qu'**elle contient des agents conservateurs.

9. Nourriture sous la forme d'un gel visqueux selon la revendication 8 **caractérisée en ce que** de l'éthoxyquine, du BHT, du propionate de calcium, du sorbate de potassium, des acides citriques, des acides lactiques ou du sel (sel de cuisine, sel marin) sont utilisés comme agents conservateurs.

10. Nourriture sous la forme d'un gel visqueux selon les revendications 1 à 9 **caractérisée en ce qu'**elle contient les aliments naturels sous forme d'animaux entiers ou de parties d'animaux parmi les types d'aliments naturels suivants : artémia salina, krill, puces d'eau (daphnies), gammares, vers d'eau douce (tubifex), vers de la vase (chironomes), larves de chaoborus, larves de culex, zooplancton (cyclopes), bosmines, larves de crevette (mysis), crevettes, asticots, vers de farine, oeufs de poisson, oeufs de crustacé, chair de coquillage, chair de poisson, seiche et/ou coeur de boeuf, ces aliments étant seuls ou mélangés.

11. Nourriture sous la forme d'un gel visqueux selon la revendication 10 **caractérisée en ce qu'**elle contient en outre des matières premières naturelles.

12. Nourriture sous la forme d'un gel visqueux selon les revendications 10 ou 11 **caractérisée en ce qu'**elle contient en outre des vitamines, des minéraux, des substances aromatiques, des appâts, des colorants et/ou des caroténoïdes.

13. Procédé de fabrication d'aliments gélatineux selon les revendications 1 à 12, **caractérisé en ce qu'**un ou plusieurs types d'aliments naturels et/ou de mélanges alimentaires courants dans le commerce, des matières premières avec un ou plusieurs gélifiants et le cas échéant avec des vitamines, des minéraux, des colorants, des substances aromatiques, des appâts et des agents conservateurs classiques sont mélangés en ajoutant de grandes quantités d'eau dans la extrudeuse à une température plus élevée (température de réaction), et **en ce que** le mélange est ensuite transformé par refroidissement à l'aide d'une extrudeuse en bâtonnets cylindriques, granulats, dés, plaquettes, flocons ou tablettes, lesquels sont déversés dans des verres, des boîtes, des blisters, des sachets, des tubes ou similaires ou encore déversés directement après l'extrusion avant d'être refroidis.

14. Procédé de fabrication d'aliments gélatineux selon les revendications 1 à 12, **caractérisé en ce qu'**un ou plusieurs types d'aliments naturels et/ou de mélanges alimentaires courants dans le commerce, des matières premières avec un ou plusieurs gélifiants et le cas échéant avec des vitamines, des minéraux, des colorants, des substances aromatiques, des appâts et des agents conservateurs classiques sont mélangés en ajoutant de grandes quantités d'eau à une température plus élevée à l'aide d'un mélangeur et d'un dispositif d'homogénéisation, et **en ce que** le mélange est ensuite transformé par refroidissement en bâtonnets cylindriques, granulats, dés, plaquettes, flocons ou tablettes, lesquels sont déversés dans des verres, des boîtes, des blisters, des sachets, des tubes ou similaires ou encore déversés directement avant d'être refroidis.
